# EUROPEAN PATENT APPLICATION

(11) **EP 4 261 705 A1**
(43) Date of publication of application: **18.10.2023**
(21) Application number: 21913727.0
(22) Date of filing: 02.12.2021
(51) Int. Cl.: G06F 16/25

(54) **DATA PROCESSING METHOD AND APPARATUS IN ARTIFICIAL INTELLIGENCE SYSTEM**

(30) Priority: 30.12.2020 CN 202011610237
(71) Applicant: Huawei Technologies Co., Ltd., Shenzhen, Guangdong 518129 (CN)
(72) Inventor: HE, Ke, Shenzhen, Guangdong 518129 (CN); LI, Chunsheng, Shenzhen, Guangdong 518129 (CN)
(74) Representative: Huawei European IPR
(86) International application number: PCT/CN2021/134927
(87) International publication number: WO 2022/142986

(57) **Abstract**

For a problem that costs of matching a new data format by a current artificial intelligence system are high, an artificial intelligence system and a corresponding data processing method and apparatus are provided, to perform, based on an artificial intelligence task from a user, format conversion on input data corresponding to the artificial intelligence task, so that a data format used by the artificial intelligence system for processing the artificial intelligence task can be extended with low costs, and the artificial intelligence system can select a proper data format to process the artificial intelligence task. Therefore, efficiency and an application scope of the artificial intelligence system are increased.

## Description

This application claims priority to Chinese Patent Application No. 202011610237.3, filed with the China National Intellectual Property Administration on December 30, 2020 and entitled "DATA PROCESSING METHOD AND APPARATUS IN ARTIFICIAL INTELLIGENCE SYSTEM", which is incorporated herein by reference in its entirety.

### TECHNICAL FIELD

This application relates to the field of artificial intelligence (artificial intelligence, AI), and in particular, to a data processing method and apparatus in an artificial intelligence system.

### BACKGROUND

Artificial intelligence is intelligence presented by machines made by human beings. Artificial intelligence has a plurality of implementations, and deep learning (deep learning) is one of the implementations. Deep learning is an algorithm that uses an artificial neural network as an architecture to represent learning of data and materials. An artificial intelligence framework, also referred to as a deep learning framework, is an advanced programming language provided for data scientists, developers, and researchers, and is dedicated for operations such as training and verifying a neural network, and using a neural network for inference.

Currently, common artificial intelligence frameworks include TensorFlow, Caffe, PyTorch, and the like. TensorFlow is used as an example. This model framework mainly supports two data formats: NCHW and NHWC. The names of the two data formats include letters N, H, W, and C. Meanings of the four letters are respectively as follows: N refers to a quantity of images in batch (Batch) processing, H refers to a quantity of pixels in a vertical height direction in an image, W refers to a quantity of pixels in a horizontal width direction in an image, and C refers to a quantity of channels included in an image. For example, a quantity of channels for a grayscale image is 1, and a quantity of channels for a color image in a red green blue (Red Green Blue, RGB) format is 3.

Main differences between the NCHW and NWHC formats lie in pixels in the vertical height direction, pixels in the horizontal width direction, and channel arrangement sequences. As a result, the two data formats have their own advantages and disadvantages. Data in the NHWC format has good locality and high cache utilization, and is more suitable to be processed by using a central processing unit (central processing unit, CPU). Data in the NCHW format is processed by using a graphics processing unit (graphics processing unit, GPU). In early development of TensorFlow, the CPU is mainly used to process data. In this case, efficiency of TensorFlow when data in the NHWC format is used is higher than that when data in the NCHW format is used. Therefore, TensorFlow uses the NHWC format as a default format. As the GPU is increasingly used in artificial intelligence training tasks and processing tasks, the NCHW format also becomes a data format that needs to be supported by the artificial intelligence framework.

The data format affects processing logic and program code of anAI system for data processing. A current AI system includes a host and an accelerator card, and usually supports only data in a specific format. When the AI system needs to adapt to a new data format, the program code and the like in the AI system need to be greatly modified, resulting in problems such as an increase in engineering workload and verification workload, and an increase in development time.

### SUMMARY

For a problem in the conventional technology that program code in an AI system needs to be greatly modified to adapt to a new data format in the AI system, this application provides an AI system and a corresponding data processing method and apparatus, to perform format conversion on input data from a user, so that a data format used by the AI system to process an AI task is extended with low costs, and the AI system can also select a proper data format to process the AI task. Therefore, efficiency of the AI system and an application scope of the AI system are increased.

According to a first aspect, this application provides anAI system. The AI system includes a host and an accelerator card. The host is configured to: obtain anAI task and first data corresponding to the AI task from a user, where the first data is in a first format; and send a first instruction to the accelerator card based on the AI task, where the first instruction instructs the accelerator card to convert the first data into second data in a second format; and the accelerator card is configured to: convert the first data into the second data according to the received first instruction; and execute the AI task by using the second data.

In this solution, the host in the AI system may perform format conversion on the first data from the user, and execute the AI task by using the data obtained through the format conversion, so that the AI system can support execution of the AI task by using the data in the new format without greatly changing program code in the AI system. Therefore, efficiency and an application scope of the AI system are increased.

According to the first aspect, in a possible implementation of this application, the host is specifically configured to send the first instruction to the accelerator card based on an operator type included in the AI task.

In this solution, the host determines, based on the operator type in the AI task, that a target format of the format conversion is the second format, and indicates, by using the first instruction, the accelerator card to convert the first data into the second data in the second format. Because using a specific data format increases processing efficiency of an affinity operator, when the target format of the format conversion is determined based on the operator type of the AI task, efficiency of processing the AI task by the AI system is increased.

According to the first aspect, in another possible implementation of this application, the AI task includes a second instruction, and the second instruction instructs to execute the AI task by using the data in the second format, and the host is specifically configured to send the first instruction to the accelerator card according to the second instruction.

In this solution, the user may specify, in the AI task, the data format to be used by the AI system to process the AI task, so as to increase efficiency of processing the AI task by the AI system.

According to the first aspect, in another possible implementation of this application, the host is further configured to establish a correspondence between the operator type included in the AI task and the second format.

In this solution, the host pre-obtains an affinity correspondence between an operator type and a data format, so that after receiving the AI task, the host may determine, based on the operator type included in the AI task and the affinity correspondence in the host, the target data format that needs to be used. Therefore, the efficiency of processing the AI task by the AI system is increased.

According to the first aspect, in another possible implementation of this application, the host stores a first mapping relationship for converting data in the first format into data in the second format, includes the first mapping relationship in the first instruction, and sends the first instruction to the accelerator card; and the accelerator card is configured to convert the first data into the second format based on the received mapping relationship.

In this solution, the host pre-stores the mapping relationship required for the format conversion, and sends the corresponding mapping relationship to the accelerator card when determining that the format conversion is required, so that the accelerator card can perform format conversion based on the mapping relationship stored in the host. Therefore, a size of data that needs to be stored in the accelerator card is reduced, and the efficiency of the AI system is increased.

According to the first aspect, in another possible implementation of this application, the AI system is located in a public cloud.

In this solution, the AI system may be configured to provide a cloud service for a user. Therefore, a usage scenario of this solution is expanded, and the application scope of the AI system is increased.

According to the first aspect, in another possible implementation of this application, the AI system processes at least one AI framework, and each of the at least one AI framework supports data in the first format.

In this solution, the format, of user input data, supported by the AI system is related to the AI framework processed by the AI system, that is, the format, of the input data, supported by the AI system needs to be supported by a related AI framework. In this way, regardless of a specific AI framework corresponding to the AI task, the AI system can process data corresponding to the AI task, so that stability of the AI system is improved.

According to the first aspect, in another possible implementation of this application, the host further stores a second mapping relationship, where the second mapping relationship is used for converting data in the first format into data in a third format.

In this solution, the host may store a plurality of mapping relationships, and the mapping relationships may be used for converting data in the first format into data in any one of a plurality of target formats. In this case, the AI system may support a plurality of types of target formats for data conversion, so that a usage scenario of the AI system is extended and a usage scope of the AI system is increased.

According to the first aspect, in another possible implementation of this application, the host further stores a third mapping relationship, where the third mapping relationship is used for converting data in a fourth format into data in the second format.

In this solution, the host may store a plurality of mapping relationships. These mapping relationships enable the AI system to support a plurality of formats of data from a user, and may be used for converting data in any format into data in the second format. In this solution, a quantity of formats, of input data, supported by the AI system is increased, so that the usage scenario of the AI system is extended and the usage scope of the AI system is increased.

According to the first aspect, in another possible implementation of this application, the host is further configured to: obtain format information of the first data; and determine, based on the format information, that the first data is in the first format.

In this solution, the AI system may support one or more formats of input data. However, because the host cannot adaptively identify the format of the first data from the user, the format of the first data may be determined in a manner such as entering format information by the user, so as to perform subsequent processing on the first data. This solution ensures that the AI system can identify the format of first data from the user, so as to improve the system stability.

According to the first aspect, in another possible implementation of this application, the host is further configured to output prompt information, where the prompt information indicates the user to enter data in the first format.

In this solution, the host outputs information about the format that is of the input data and that is supported by the host, so as to prompt the user to provide input data that is in the format and that can be supported by the host, so that the system stability is improved.

According to a second aspect, this application provides an AI system. The AI system includes a host and an accelerator card. The host is configured to: obtain anAI task and first data corresponding to the AI task from a user, where the first data is in a first format, convert the first data into second data in a second format based on the AI task; and send the second data to the accelerator card; and the accelerator card is configured to: receive the second data; and execute the AI task by using the second data.

According to the second aspect, in a possible implementation of this application, the host is specifically configured to convert the first data into the second data based on an operator type included in the AI task.

According to the second aspect, in another possible implementation of this application, the AI task includes a second instruction, and the second instruction instructs to execute the AI task by using the data in the second format, and the host is specifically configured to convert the first data into the second data according to the second instruction.

According to the second aspect, in another possible implementation of this application, a correspondence between the operator type included in the AI task and the second format is established.

According to the second aspect, in another possible implementation of this application, the host stores a first mapping relationship for converting data in the first format into data in the second format, and the host is specifically configured to convert the first data into the second data based on the first mapping relationship.

According to the second aspect, in another possible implementation of this application, the AI system is located in a public cloud.

According to the second aspect, in another possible implementation of this application, the AI system processes at least one AI framework, and each of the at least one AI framework supports data in the first format.

According to the second aspect, in another possible implementation of this application, the host further stores a second mapping relationship, where the second mapping relationship is used for converting data in the first format into data in a third format.

According to the second aspect, in another possible implementation of this application, the host further stores a third mapping relationship, where the third mapping relationship is used for converting data in a fourth format into data in the second format.

According to the second aspect, in another possible implementation of this application, the host is further configured to: obtain format information of the first data; and determine, based on the format information, that the first data is in the first format.

According to the second aspect, in another possible implementation of this application, the host is further configured to output prompt information, where the prompt information indicates the user to enter data in the first format.

According to a third aspect, this application provides a data processing method. The method is applied to a host in an AI system, the AI system further includes an accelerator card, and the method includes: obtaining an AI task and first data corresponding to the AI task from a user, where the first data is in a first format; and sending a first instruction to the accelerator card based on the AI task, where the first instruction instructs the accelerator card to convert the first data into second data in a second format.

According to the third aspect, in a possible implementation of this application, the step of sending a first instruction to the accelerator card based on the AI task specifically includes: sending the first instruction to the accelerator card based on an operator type included in the AI task.

According to the third aspect, in another possible implementation of this application, the AI task further includes a second instruction, and the second instruction instructs to execute the AI task by using the data in the second format; and the method further includes: sending the first instruction to the accelerator card according to the second instruction.

According to the third aspect, in another possible implementation of this application, the method further includes: establishing a correspondence between the operator type included in the AI task and the second format.

According to the third aspect, in another possible implementation of this application, the host stores a first mapping relationship for converting data in the first format into data in the second format, and the first instruction includes the first mapping relationship.

According to the third aspect, in another possible implementation of this application, the AI system is located in a public cloud.

According to the third aspect, in another possible implementation of this application, the AI system processes at least one AI framework, and each of the at least one AI framework supports data in the first format.

According to the third aspect, in another possible implementation of this application, the host further stores a second mapping relationship, where the second mapping relationship is used for converting data in the first format into data in a third format.

According to the third aspect, in another possible implementation of this application, the host further stores a third mapping relationship, and the third mapping relationship is used for converting data in a fourth format into data in the second format.

According to the third aspect, in another possible implementation of this application, the method further includes: obtaining format information of the first data; and determining, based on the format information, that the first data is in the first format.

According to the third aspect, in another possible implementation of this application, the method further includes: outputting prompt information, where the prompt information indicates the user to enter data in the first format.

According to a fourth aspect, this application provides a data processing method. The method is applied to a host in an AI system, the AI system further includes an accelerator card, and the method includes: obtaining an AI task and first data corresponding to the AI task from a user, where the first data is in a first format; and converting the first data into second data in a second format based on the AI task, and sending the second data to the accelerator card.

According to the fourth aspect, in a possible implementation of this application, the step of converting the first data into second data in a second format based on the AI task specifically includes: converting the first data into the second data based on an operator type included in the AI task.

According to the fourth aspect, in another possible implementation of this application, the AI task includes a second instruction, where the second instruction instructs to execute the AI task by using the data in the second format; and the step of converting the first data into second data in a second format based on the AI task specifically includes: sending the first instruction to the accelerator card according to the second instruction.

According to the fourth aspect, in another possible implementation of this application, the method further includes: establishing a correspondence between the operator type included in the AI task and the second format.

According to the fourth aspect, in another possible implementation of this application, the host stores a first mapping relationship for converting data in the first format into data in the second format, and the first instruction includes the first mapping relationship.

According to the fourth aspect, in another possible implementation of this application, the AI system is located in a public cloud.

According to the fourth aspect, in another possible implementation of this application, the AI system processes at least one AI framework, and each of the at least one AI framework supports data in the first format.

According to the fourth aspect, in another possible implementation of this application, the host further stores a second mapping relationship, where the second mapping relationship is used for converting data in the first format into data in a third format.

According to the fourth aspect, in another possible implementation of this application, the host further stores a third mapping relationship, where the third mapping relationship is used for converting data in a fourth format into data in the second format.

According to the fourth aspect, in another possible implementation of this application, the method further includes: obtaining format information of the first data, and determining, based on the format information, that the first data is in the first format.

According to the fourth aspect, in another possible implementation of this application, the method further includes: outputting prompt information, where the prompt information indicates the user to enter data in the first format.

According to a fifth aspect, this application provides a data processing method. The data processing method is applied to an accelerator card in anAI system, the AI system further includes a host, and the method includes: receiving first data and a first instruction that are sent by the host, where the first data is in a first format, converting the first data into second data according to the first instruction, where the second data is in a second format; and executing an AI task by using the second data.

According to the fifth aspect, in a possible implementation of this application, the first instruction includes a first mapping relationship, and the step of converting the first data into second data according to the first instruction includes: converting the first data into the second data based on the first mapping relationship.

According to the fifth aspect, in another possible implementation of this application, the second format corresponds to an operator type included in the AI task.

According to the fifth aspect, in another possible implementation of this application, the AI system is located in a public cloud.

According to the fifth aspect, in another possible implementation of this application, the method further includes: receiving a second mapping relationship sent by the host, where the second mapping relationship is used for converting data in the first format into data in a third format.

According to the fifth aspect, in another possible implementation of this application, the method further includes: receiving a third mapping relationship sent by the host, where the third mapping relationship is used for converting data in a fourth format into data in the second format.

According to the fifth aspect, in another possible implementation of this application, the AI system processes at least one AI framework, and each of the at least one AI framework supports data in the first format.

According to a sixth aspect, this application provides a data processing apparatus. The data processing apparatus is located in an AI system, the AI system further includes an accelerator card, and the data processing apparatus includes: an obtaining module, configured to obtain an AI task and first data corresponding to the AI task from a user, where the first data is in a first format, and a transmission module, configured to send a first instruction to the accelerator card based on the AI task, where the first instruction instructs the accelerator card to convert the first data into second data in a second format.

According to the sixth aspect, in a possible implementation of this application, the transmission module is specifically configured to send the first instruction to the accelerator card based on an operator type included in the AI task.

According to the sixth aspect, in another possible implementation of this application, the AI task includes a second instruction, and the second instruction instructs to execute the AI task by using the data in the second format; and the transmission module is specifically configured to send the first instruction to the accelerator card according to the second instruction.

According to the sixth aspect, in another possible implementation of this application, the obtaining module is further configured to establish a correspondence between the operator type included in the AI task and the second format.

According to the sixth aspect, in another possible implementation of this application, the data processing apparatus stores a first mapping relationship for converting data in the first format into data in the second format, and the first instruction includes the first mapping relationship.

According to the sixth aspect, in another possible implementation of this application, the AI system is located in a public cloud.

According to the sixth aspect, in another possible implementation of this application, the AI system processes at least one AI framework, and each of the at least one AI framework supports data in the first format.

According to the sixth aspect, in another possible implementation of this application, the data processing apparatus further stores a second mapping relationship, where the second mapping relationship is used for converting data in the first format into data in a third format.

According to the sixth aspect, in another possible implementation of this application, the data processing apparatus further stores a third mapping relationship, where the third mapping relationship is used for converting data in a fourth format into data in the second format.

According to the sixth aspect, in another possible implementation of this application, the obtaining module is further configured to obtain format information of the first data; and the data processing apparatus further includes a determining module, configured to determine that the first data is in the first format.

According to the sixth aspect, in another possible implementation of this application, the transmission module is further configured to output prompt information, where the prompt information indicates the user to enter data in the first format.

According to a seventh aspect, this application provides a data processing apparatus. The data processing apparatus is located in an AI system, the AI system further includes an accelerator card, and the data processing apparatus includes: an obtaining module, configured to obtain an AI task and first data corresponding to the AI task from a user, where the first data is in a first format; a conversion module, configured to convert the first data into second data in a second format based on the AI task; and a transmission module, configured to send the second data to the accelerator card.

According to the seventh aspect, in a possible implementation of this application, the conversion module is specifically configured to convert the first data into the second data based on an operator type included in the AI task.

According to the seventh aspect, in another possible implementation of this application, the AI task includes a second instruction, and the second instruction instructs to execute the AI task by using the data in the second format; and the conversion module is specifically configured to convert the first data into the second data according to the second instruction.

According to the seventh aspect, in another possible implementation of this application, the obtaining module is further configured to establish a correspondence between the operator type included in the AI task and the second format.

According to the seventh aspect, in another possible implementation of this application, the data processing apparatus stores a first mapping relationship for converting data in the first format into data in the second format, and the conversion module is specifically configured to convert the first data into the second data based on the first mapping relationship.

According to the seventh aspect, in another possible implementation of this application, the AI system is located in a public cloud.

According to the seventh aspect, in another possible implementation of this application, the AI system processes at least one AI framework, and each of the at least one AI framework supports data in the first format.

According to the seventh aspect, in another possible implementation of this application, the data processing apparatus further stores a second mapping relationship, where the second mapping relationship is used for converting data in the first format into data in a third format.

According to the seventh aspect, in another possible implementation of this application, the data processing apparatus further stores a third mapping relationship, where the third mapping relationship is used for converting data in a fourth format into data in the second format.

According to the seventh aspect, in another possible implementation of this application, the obtaining module is further configured to obtain format information of the first data; and the data processing apparatus further includes a determining module, configured to determine that the first data is in the first format.

According to the seventh aspect, in another possible implementation of this application, the transmission module is further configured to output prompt information, where the prompt information indicates the user to enter data in the first format.

According to an eighth aspect, this application provides a data processing apparatus. The data processing apparatus is located in an AI system, the AI system further includes a host, and the data processing apparatus includes: a transmission module, configured to receive first data and a first instruction that are sent by the host, where the first data is in a first format; a conversion module, configured to convert the first data into second data according to the first instruction, where the second data is in a second format, and a processing module, configured to execute an AI task by using the second data.

According to the eighth aspect, in a possible implementation of this application, the first instruction includes a first mapping relationship, and the conversion module is specifically configured to convert the first data into the second data based on the first mapping relationship.

According to the eighth aspect, in another possible implementation of this application, the second format corresponds to an operator type included in the AI task.

According to an eighth aspect, in another possible implementation of this application, the AI system is located in a public cloud.

According to the eighth aspect, in another possible implementation of this application, the transmission module is further configured to receive a second mapping relationship sent by the host, where the second mapping relationship is used for converting data in the first format into data in a third format.

According to the eighth aspect, in another possible implementation of this application, the transmission module is further configured to receive a third mapping relationship sent by the host, where the third mapping relationship is used for converting data in a fourth format into data in the second format.

According to an eighth aspect, in another possible implementation of this application, the AI system processes at least one AI framework, and each of the at least one AI framework supports data in the first format.

According to a ninth aspect, this application provides a computer apparatus. The computer apparatus includes a processor and a memory. The memory is configured to store program code. The processor is configured to process the program code in the memory to perform the data processing method according to the fourth aspect or the fifth aspect.

According to a tenth aspect, this application provides a computer apparatus. The computer apparatus includes a processor and a memory. The memory is configured to store program code. The processor is configured to process the program code in the memory to perform the data processing method according to the sixth aspect.

According to an eleventh aspect, this application provides a computer storage medium. The computer storage medium includes instructions. When the instructions are run on a computer apparatus, the computer apparatus is enabled to perform the data processing method according to the fourth aspect or the fifth aspect.

According to a twelfth aspect, this application provides a computer storage medium. The computer storage medium includes instructions. When the instructions are run on a computer apparatus, the computer apparatus is enabled to perform the data processing method according to the sixth aspect.

According to a thirteenth aspect, this application provides computer program code. When the computer program code is run on a computer apparatus, the computer apparatus is enabled to perform the data processing method according to the fourth aspect or the fifth aspect.

According to a fourteenth aspect, this application provides computer program code. When the computer program code is run on a computer apparatus, the computer apparatus is enabled to perform the data processing method according to the sixth aspect.

### BRIEF DESCRIPTION OF DRAWINGS

FIG. 1 is a schematic diagram of a structure of data in an NCHW format and calculation of the data in the NCHW format,
FIG. 2 is a schematic diagram of a structure of data in an NHWC format and calculation of the data in the NHWC format,
FIG. 3 is a schematic diagram of an architecture of an Al system;
FIG. 4 is a schematic diagram of an architecture of an Al system according to this application;
FIG. 5 is a schematic diagram of data format processing in an AI system according to this application;
FIG. 6 is a schematic flowchart of an embodiment in which anAI system processes data according to this application;
FIG. 7 is a schematic diagram of converting data in an NHWC format into data in a 5HD format,
FIG. 8 is a schematic flowchart of another embodiment in which an AI system processes data according to this application;
FIG. 9 is a schematic flowchart of another embodiment in which an AI system processes data according to this application;
FIG. 10 is a schematic diagram of an interface in a cloud service scenario according to this application;
FIG. 11 is a schematic diagram of module composition of a data processing apparatus;
FIG. 12 is a schematic diagram of module composition of another data processing apparatus; and
FIG. 13 is a schematic diagram of a structure of a computer apparatus according to this application.

### DESCRIPTION OF EMBODIMENTS

First, some terms in this application are explained.

An operator (Operator) is mapping for converting an element into another element in vector space. For example, performing an operator operation on an element such as data may be understood as performing a type of operation, for example, calculation such as addition, subtraction, multiplication, division, differentiation, or convolution, on the data.

A mapping layer is a part of program code stored in a host. When the part of program code is executed, the host performs an operation of determining a format used when feature data is stored in a memory of an accelerator card, and performs a data format conversion operation or indicates the accelerator card to perform the data format conversion operation. The mapping layer includes a mapping relationship between different data formats, and the mapping relationship is a method for converting data in one format into data in another format.

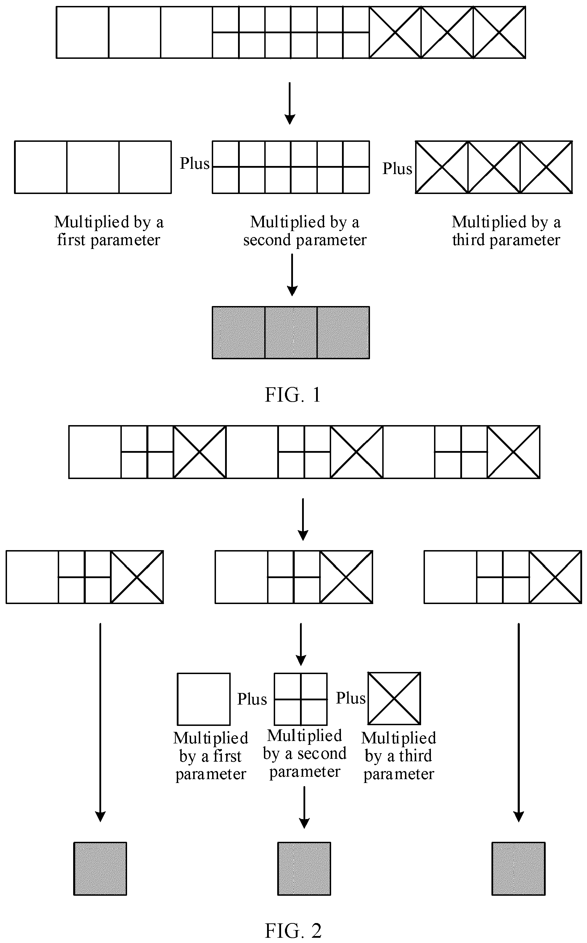

FIG. 1 is a schematic diagram of a structure of data in an NCHW format and calculation of the data in the NCHW format.

The following uses data having three RGB channels as an example. As shown in FIG. 1, when data is arranged in an NCHW format, channel layers are arranged on an outermost side, and pixels over each channel are close to form data in an RRRGGGBBB format (where in the figure, a white box is for representing an R pixel, a box with a cross is for representing a G pixel, and a cross box is for representing a B pixel). When color-to-gray conversion calculation is performed on the data in the NCHW format, all pixel values of an R channel are multiplied by a first parameter, all pixel values of a G channel are multiplied by a second parameter, and all pixel values of a B channel are multiplied by a third parameter. Finally, calculation results of the three channels are added based on corresponding pixels to obtain gray pixel data (where in the figure, a gray box is for representing a gray pixel).

FIG. 2 is a schematic diagram of a structure of data in an NHWC format and calculation of the data in the NHWC format.

Similarly, data having three RGB channels is used as an example for description. As shown in FIG. 2, when data is arranged in an NHWC format, channel layers are arranged on an innermost side, and pixels at same spatial locations over a plurality of channels are close, that is, data in an RGBRGBRGB format is formed. When color-to-grayscale conversion calculation is performed on the data in the NHWC format, the data in the NHWC format is divided into a plurality of (R, G, B) pixel groups, a value of an R pixel in each pixel group is multiplied by a first parameter, a value of a G pixel is multiplied by a second parameter, and a value of a B pixel is multiplied by a third parameter, multiplication results of the pixel group are directly added to obtain a value of a gray pixel, and then a plurality of gray pixels are spliced to obtain all gray pixels.

It can be learned from FIG. 1 and FIG. 2 that, when the two data formats NCHW and NHWC are separately used for performing RGB pixel-to-gray pixel calculation, complexity is basically the same, and a difference lies in a memory access feature. When data in the NWHC format is used for calculation, every three input pixels can be directly calculated to obtain an output pixel. Therefore, memory access locality is good, and a CPU is more suitable for execution. However, when data in the NCHW format is used for calculation, a final output pixel can be calculated only after input pixels of all channels are calculated. This occupies large temporary storage space and a GPU is more suitable for execution.

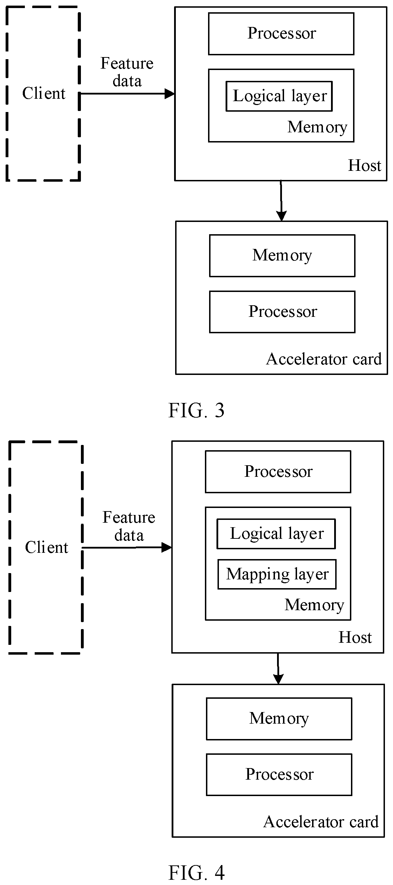

FIG. 3 is a schematic diagram of an architecture of anAI system.

As shown in FIG. 3, the AI system includes a host and an accelerator card. The host includes a processor and a memory. The memory includes program code of a logical layer. The processor executes the program code in the memory to implement a function of the logical layer. The logical layer is program code for processing a received AI task and input data. To parse the input data, the code of the logical layer usually supports a specific format of the input data. The memory may be a volatile memory such as a random access memory (Random Access Memory, RAM), or may be a non-volatile memory such as a flash (flash) memory or a read-only memory (Read-Only Memory, ROM). The accelerator card also includes a processor and a memory. The memory is configured to store feature data. The processor may process the feature data to obtain a result of the AI task. The host receives inference or training tasks sent by a client. The tasks include feature data. The host sends the feature data to the accelerator card, and indicates an arrangement manner of the feature data in the memory of the accelerator card. The arrangement manner of the feature data in the memory of the accelerator card is the same as a data format specified at the logical layer. The logical layer serves as a bridge connecting the client and the accelerator card, and a format of data received from the client also needs to be the data format specified at the logical layer. In other words, if it is determined, at the logical layer, that the feature data is stored in an NCHW data format, the client sends only the feature data in the NCHW format to the host, and the accelerator card also stores the feature data in the NCHW data format.

The AI system shown in FIG. 3 can better support processing of feature data in a fixed format. However, when the AI system needs to support a new data format, program code in the host and the accelerator card needs to be modified for adaptation. This involves the following aspects:

First, at a logical level, logic and code that are related to a tensor need to be modified, including related information and modules such as a specification, a stride (stride), and a shape. Second, when feature data is written into the memory in the accelerator card, a data format of the tensor in the memory and related information and modules such as data reading and writing need to be modified. Third, at an operator level, related logic, such as an input and an output of logical data, needs to be modified. Fourth, at a user layer, memory allocation conversion logic needs to be added, so that different data formats can be used in different scenarios. In addition, to adapt to different AI frameworks, accelerator card manufacturers need to perform development separately for different models and data storage formats. In addition, resources at the logical level, a storage level, and the user level cannot be reused, causing a waste of a large quantity of resources.

FIG. 4 is a schematic diagram of an architecture of anAI system according to this application.

As shown in FIG. 4, the AI system includes a host and an accelerator card. In comparison with the AI system in FIG. 3, a memory in the host includes program code of a mapping layer. When the code is executed by a processor in the host, the host may convert data in one format into data in another format, or indicate the accelerator card to convert data in one format into data in another format. In addition, the mapping layer may further include code for determining a format to be used by the accelerator card to store data. A form of the program code of the mapping layer is not limited in this application.

The host is connected to the accelerator card through a bus or network. When the host is connected to the accelerator card through a bus, the host may transmit data to the accelerator card through the peripheral component interconnect express (Peripheral Component Interconnect Express, PCIe) protocol, the compute express link (compute express link, CXL) protocol, the universal serial bus (Universal Serial Bus, USB) protocol, or the like. When the host is connected to the accelerator card through a network, the host may be connected to the accelerator card through a wired network such as a network cable, or may be connected to the accelerator card through a wireless network such as a wireless (Wi-Fi) hotspot or Bluetooth (Bluetooth). In addition, the accelerator card may be directly inserted into a slot on a main board of the host, or may be connected to the host through a cable. The accelerator card may be located inside the host, or may be located outside the host. A connection manner and a location relationship between the accelerator card and the host are not limited in this application.

The accelerator card includes components such as a processor and a memory. The processor includes a task scheduler (task scheduler) that is responsible for scheduling an AI task and an AI core that is configured to process the AI task. The AI core further includes modules such as a load/store unit (Load/Store Unit, LSU), a scalar (Scalar) calculation unit, and a vector (Vector) calculation unit. The scalar calculation unit is a single-instruction, single-data stream (Single instruction Single data, SISD) processor, and the processor of this type processes only one piece of data (usually an integer or a floating-point number) at the same time. The vector calculation unit is also referred to as an array processor, and is a processor that can directly operate a group of arrays or vectors for calculation. The loading/storage unit is configured to load to-be-processed data and store processed data.

When the AI system shown in FIG. 4 is used, the host may receive an AI task and corresponding feature data from a client, and transfer the AI task and the feature data to the accelerator card for processing. The client may be a computer apparatus other than the host, and the computer apparatus is connected to the host through a network or the like. Alternatively, the client may be a software program running on the host. When the software program is running, an interface is provided for a user, and the user may enter an AI task and upload corresponding feature data through the interface. A form of the client is not limited in this application.

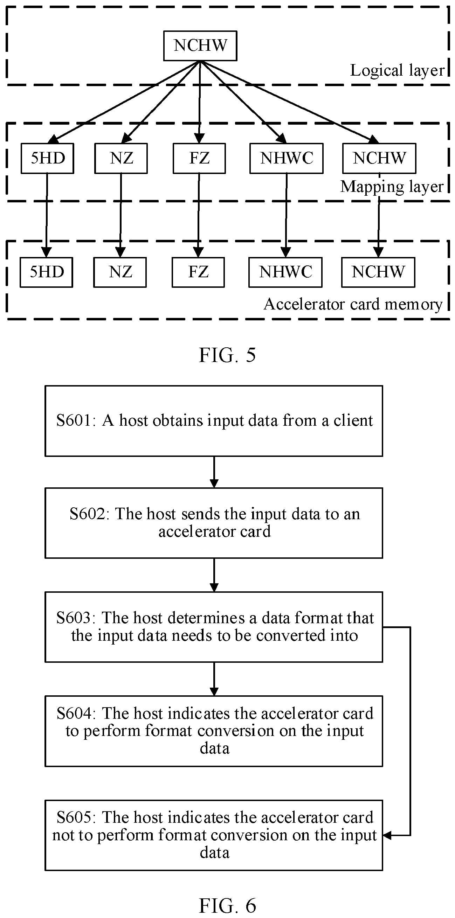

FIG. 5 is a schematic diagram of data format processing in an AI system according to this application.

As shown in FIG. 5, a logical layer includes a type of a supported format of data received from a client. For example, the logical layer of the AI system includes only program code related to an NCHW format, so that the AI system can process only data, in the NCHW format, that is transmitted by a user through the client. A mapping layer includes a mapping relationship between a format that is of input data and that is supported by the AI sy stem and a plurality of other data formats, for example, a 5HD format, an NZ format, an FZ format, and an NHWC format. This means that when program code of the logical layer is run, data, in the NCHW format, received from the client may be converted into data in these formats, or an accelerator card is indicated to perform the data conversion operation based on the mapping relationship. Data obtained through the format conversion may be stored in a memory of the accelerator card in a new format, and subsequent calculation is performed.

The 5HD format is also referred to as an NC1HWC0 format. In comparison with the NHWC format, the 5HD format splits a channel parameter in the NHWC format into two parameters: C1 and C0, and a value of an original channel parameter C is equal to C1 multiplied by C0. The FZ format is also referred to as a fractal Z. In this format, sorting is performed by column in a data block and data blocks are sorted by row. A Zn format is used. The NZ format is relative to the FZ format. In the NZ format, sorting is performed in a zN format. To be specific, sorting is performed by row in a data block and data blocks are sorted by column. It should be noted that the foregoing data format types are merely examples for description. A format that is of input data and that is supported by the AI system and a type of a target data format obtained through conversion are not limited in this application.

In addition, a setting function is usually preset in the AI system, especially a host in the AI system, so that an administrator sets the AI system by using the setting function. The administrator herein is mainly a person who maintains the AI system. However, in some scenarios, the administrator may alternatively be a user who sends an AI task to the AI system or another user related to the AI system. A specific scope of the administrator is not limited in this application.

The following are some examples of setting the AI system by the administrator:

First, the administrator may determine a format that is of data from the client and that is supported by the AI system.

For the AI system, when received data entered by a user through the client is processed, program code for processing input data in a specific format needs to be provided at the logical layer, and a mapping relationship for converting the input data into data in another format needs to be provided at the mapping layer. Therefore, the AI system needs to determine a format that is of input data and that can be supported by the AI system, and output information in the format to the user, so that the user can learn of the format that is of the input data and that is supported by the AI system, and correctly enter data.

When the administrator determines the supported format of the input data, the format may be determined based on all or main AI frameworks that are processed by the AI system and that are related to the AI system. For example, when the AI system is mainly configured to process an AI task of a PyTorch framework, and most feature data of the PyTorch framework is in the NCHW format, the administrator may determine the NCHW format as the format that is of the input data and that is supported by the AI system.

Second, the administrator may maintain an affinity correspondence stored in the AI system.

For different operators or calculation types, calculation is performed faster in a particular data format. Therefore, in this application, a format of input data stored in the accelerator card may be determined based on a type of calculation that needs to be performed on the input data during execution of the AI task. However, the AI system usually cannot determine an affinity correspondence between a calculation type and a data format. Therefore, the AI system may receive a maintenance instruction sent by the administrator. The instruction instructs the host to establish, modify, or delete the affinity correspondence between a calculation type and a data format. After receiving the instruction, according to the instruction, the host establishes a new affinity correspondence, or modifies or deletes an existing affinity correspondence.

Third, the administrator can adjust the supported format of the input data.

As mentioned above, the administrator may determine the supported format of the input data based on the AI framework processed by the AI system. When the AI system processes a plurality of types of AI frameworks, data formats supported by these AI frameworks need to be integrated, and a data format supported by all the AI frameworks is selected from the data formats. Alternatively, the AI system is enabled to support a plurality of formats of input data, and the plurality of formats of the input data may cover data formats supported by the AI frameworks processed by the AI system.

In this case, when the AI framework processed by the AI system changes, the format that is of the input data and that is supported by the AI system may change correspondingly. The administrator may send an instruction to the host in the AI system, to use the instruction to enable the host to perform adjustment of the supported format of the input data, including addition, modification, or deletion of the supported data format. The administrator may further adjust program code that is of the logical layer and the mapping layer and that is stored in the host, so that the logical layer can support an adjusted format of the input format, and the mapping layer includes a mapping relationship between the adjusted format of the input data and a target data format that is obtained through conversion and that is supported by the AI system.

Fourth, the administrator can adjust a type of a target format for data conversion.

With development of science and technology, a new operator type may appear in an Al task, and a new data format may appear to process the operator of the type. Alternatively, a new data format may be created, and the new data format is found to be capable of processing an existing operator type more efficiently. In this case, the AI system can adjust, according to an instruction of the administrator, the target format that can be converted into.

FIG. 6 is a schematic flowchart of an embodiment in which anAI system processes data according to this application.

S601: A host receives input data from a user.

The AI system is mainly for executing AI tasks, including a training (training) task and an inference (inference) task. In a training task, a large amount of feature data for training is input into the AI system. The AI system uses a neural network to determine the received feature data, compares an obtained determining result with an actual result, and adjusts a model used in the neural network based on a comparison result to obtain a more accurate model. In an inference task, a trained model is for resolving a real problem, for example, image recognition or intelligent video surveillance. For both a training task and an inference task, a user usually needs to provide a large amount of input data. The input data includes feature data representing a feature map (feature map), and in some cases, may further include model data provided by the user, for example, a weight of a model. The AI system uses the data as an input of the training task or the inference task and processes the data subsequently.

The host of the AI system receives, from a client, an AI task from a user and feature data corresponding to the AI task. A mapping layer in the host includes logic for processing feature data. In a possible implementation, the host outputs a format that is of input data and that is supported by the host, to inform the user of the information. For example, the information about the data format supported by the host is displayed on an interface on which the client sends the AI task to the host. In addition, the host may parse the input data sent by the user, and determine whether the feature data satisfies a format requirement. When a format of the input data does not belong to the format that is of the input data and that is supported by the host, the host returns an error prompt to the client, where the error prompt indicates that the format of the data sent by the client is incorrect.

S602: The host sends the input data to an accelerator card.

After receiving the input data from the user, the host sends the input data to the accelerator card. Because the input data is usually large, to increase efficiency of the entire AI system, the host may directly and transparently transmit the received input data to the accelerator card.

S603: Determine a target data format that the input data needs to be converted into.

In this embodiment, a memory in the host includes program code corresponding to a logical layer, and further includes program code of the mapping layer. A function of the mapping layer is first to determine a format in which the input data received by the AI system needs to be stored in the accelerator card, so as to ensure that the input data canbe correctly and efficiently processed by the accelerator card.

For a data format converted from the input data, in a possible implementation of this application, the host determines, based on an operator type related to the input data in the current AI task, a data format with high computing efficiency. This is because some types of operators are more suitable for processing in a data format of a particular feature. To be specific, for a specified calculation type, efficiency of performing calculation by using data in different formats is different, and the specified calculation type also has a corresponding data format with highest efficiency. This is usually referred to as affinity between an operator type and a data format. For example, calculation efficiency is higher when a 5HD format is used for convolution calculation, and calculation efficiency is higher when an NZ format is used for matrix multiplication calculation.

In this case, the host may determine, based on a calculation type that needs to be performed on the input data, a target data format that the input data needs to be converted into. For example, when convolution calculation is mainly performed on the input data in this AI task, it may be determined that the input data needs to be converted into data in the 5HD format. When both convolution calculation and matrix multiplication calculation are performed on the input data, the host may determine, based on a ratio of the two calculation types in this AI task or comprehensive performance of different data formats in the two calculation types, the target data format that needs to be converted into; or may determine, during convolution calculation, that the feature data needs to use the 5HD format, and then determine to convert the current data into data in the NZ format when matrix multiplication calculation is to be performed after the convolution calculation is completed.

In another possible implementation of this application, the target data format that the input data needs to be converted into may be determined based on a type of a processor in the accelerator card. Different types of processors are respectively suitable for processing data in corresponding types of formats. For example, a CPU is more suitable for processing data in an NWHC format, and a GPU is more suitable for processing data in an NCHW format. Therefore, the host may obtain information about the type of the processor in the accelerator card that processes this AI task, and determine the target data format based on the type of the processor.

However, in another possible implementation of this application, an administrator or a user of the AI system may indicate the host to determine the target data format that the input data needs to be converted into. For example, after receiving an AI task, the host may determine a format that input data needs to be converted into, and send the information to the host by using an instruction. After receiving the instruction, the host determines that a target data format determined by the administrator is the data format that the input data needs to be converted into.

S604: The host indicates the accelerator card to perform format conversion on the input data.

Another function of the mapping layer of the host is to indicate the accelerator card to perform format conversion on the input data. When the host determines, in step S603, the data format used by the input data, and if the data format is different from the format of the data received by the host, the host needs to indicate the accelerator card to convert the previously received data into the newly determined data format.

The mapping layer includes a mapping relationship for conversion between different formats. The mapping relationship may be program code including a function used for data conversion. When input data in one format is received, the input data may be converted into data in another format. A mapping relationship between a supported initial data format and some common data formats may be preset at the mapping layer; or a type of an initial data format or a target data format that is supported may need to be added based on a use requirement subsequently.

An example in which an NHWC format is converted into the 5HD format is used for description. In this example, the format of the input data received by the host is NHWC, and it is determined that the input data needs to be converted into data in the 5HD format. Correspondingly, when data format conversion is performed, a common practice is as follows: (1) The data in the NHWC format is first divided in a channel dimension, and C1 pieces of data in an NHWC0 format are obtained. (2) Then, the obtained C1 pieces of data in the NHWC0 format are continuously arranged, to form data in an NC1HWC0 format.

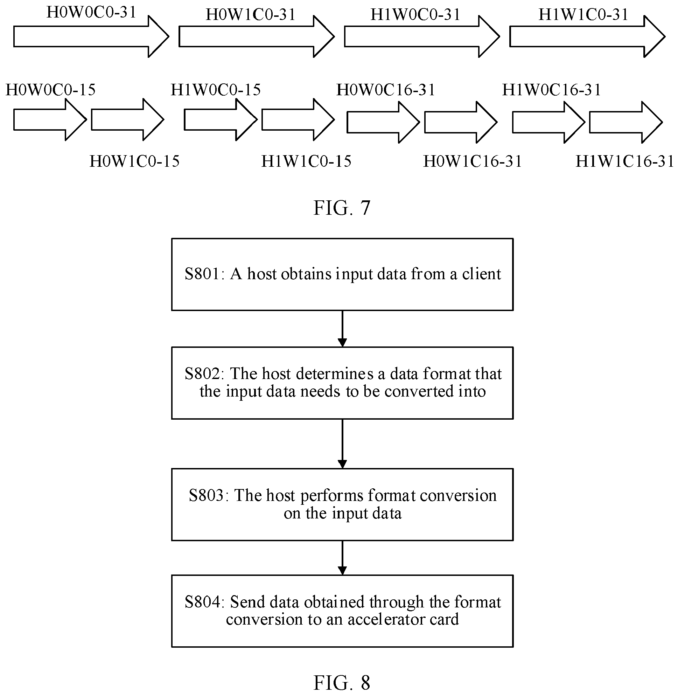

FIG. 7 is a schematic diagram of converting data in an NHWC format into data in a 5HD format. As shown in FIG. 7, a size of data in the NHWC format is (1, 2, 2, 32), to be specific, the height of the data is 2, the width of the data is 2, the data corresponds to a 2*2 matrix, and a quantity of channels is 32. After data conversion, a data size of the data in an NC 1HWC0 format is (1, 2, 2, 2, 16), where a value of C1 is 2, and a value of C0 is 16. When the data in the NHWC format is arranged, values of all 32 channels of the first pixel in the 2*2 matrix are arranged first, then values of all 32 channels of the second pixel are arranged, and the like. In the NC1HWC0 format, values of the first 16 channels of the first pixel are arranged first, and then values of the first 16 channels of the second pixel are arranged until the first 16 channels of each pixel are arranged. Then values of the last 16 channels of each of the four pixels are arranged.

For converting the data in the NHWC format into the data in the 5HD format, refer to the following formula: Tensor.reshape([N, H, W, Cl, C0]).transpose([0, 3, 1, 2, 4]). Similarly, for converting data in an NCHW format into data in the 5HD format, refer to the following formula: Tensor.reshape([N, C1, C0, H, W]).transpose([0, 1, 3, 4, 2]).

As a quantity of layers increases, values of the length and the width of a feature map of a typical convolutional neural network gradually decrease after downsampling. However, a quantity of channels usually increases as a quantity of convolutional filters increases. For example, in practice, a very deep feature map with 128 or 256 channels usually exists. To make full use of a limited quantity of matrix calculation units, it is necessary to split a channel dimension.

It should be noted that, in this application, a format conversion process is described only by converting data in the NHWC or NCHW format into data in the 5HD format. Actually, a data format before conversion is not limited, and a data format after conversion is not limited in this application.

In addition, in this application, after receiving data from the client, the host may first directly send the data to the accelerator card, and then indicate the client to perform a data format conversion operation after determining a storage format that needs to be used for the data. Alternatively, after the data format that needs to be used for the data is determined, an operation instruction for data format conversion and input data corresponding to the operation instruction may be sent to the accelerator card together. In other words, step S602 may be performed before step S604, or S602 and S604 may be performed together. A sequence of the steps is not limited in this application.

S605: Indicate the accelerator card not to perform format conversion on the input data.

In step S604, when the host determines that the target data format is consistent with the format of the input data received by the host, the accelerator card does not need to perform format conversion on the input data. In this case, the host may send an instruction to the accelerator card, to indicate the accelerator card not to convert the format of the input data when executing the AI task; or may not send an instruction to the accelerator card, where when receiving the input data for a period of time or starts to execute the AI task, the accelerator card does not receive an instruction sent by the host for converting the format of the input data, it is considered that format conversion does not need to be performed on the input data, and the input data is directly processed.

FIG. 8 is a schematic flowchart of another embodiment in which an AI system processes data according to this application.

S801: A host receives input data from a user.

For an operation of receiving the input data by the host, refer to step S601. Details are not described herein again.

S802: The host determines a data format that the input data needs to be converted into.

For an operation of determining, by the host, the data format that the input data needs to be converted into, refer to step S602. Details are not described herein again.

S803: The host performs format conversion on the input data.

After determining a data format that needs to be used for storing the input data in an accelerator card, the host further determines, based on a format of the received data and the data format that needs to be used, whether the input data needs to be converted. When the format of the received data is inconsistent with the data format that needs to be used, the host determines to convert the input data.

In the embodiment shown in FIG. 6, the host indicates the accelerator card to complete the format conversion of the input data. However, in this embodiment, the host directly performs format conversion on the input data based on a mapping relationship, at a mapping layer, between the format of the received data and the determined target data format.

S804: The host sends the data obtained through the format conversion to the accelerator card.

After the format conversion is completed, the host sends the input data in the target format to the accelerator card. The accelerator card directly stores the data that is sent by the host and that is obtained through the format conversion, and does not need to perform format conversion when processing the data subsequently.

In the embodiment in FIG. 6, the host indicates the accelerator card to perform format conversion on the input data. In the embodiment in FIG. 8, the host performs format conversion on the input data. It should be noted that, in a possible implementation of this application, the two manners may alternatively be combined. To be specific, when a plurality of times of data conversion need to be performed on the input data, the host and the accelerator card may separately perform one or more format conversion operations. For example, when a plurality of types of calculation need to be performed on the input data subsequently, format conversion may be performed on the input data for a plurality of times. In this case, the host may complete the first format conversion, and send data obtained through the format conversion to the accelerator card. After receiving the data, the accelerator card stores the data and uses the data obtained through the format conversion to complete calculation of a corresponding type, and performs data conversion again as indicated by the host.

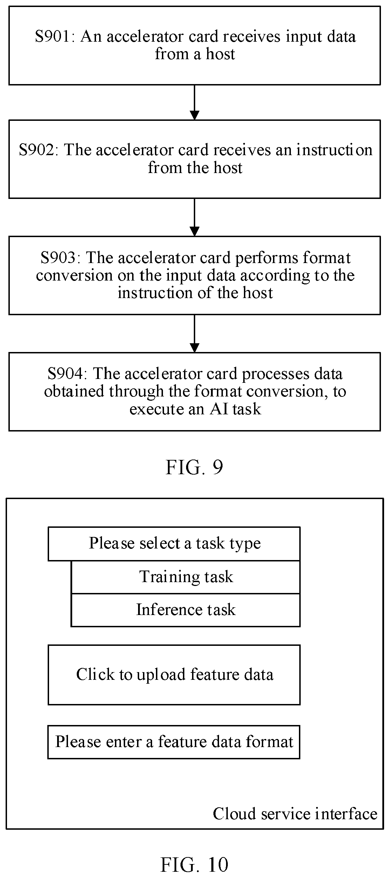

FIG. 9 is a schematic flowchart of another embodiment in which an AI system processes data according to this application.

S901: An accelerator card receives input data from a host.

An AI task is finally executed by the accelerator card. Therefore, after receiving an AI task from a client, the host sends the AI task and corresponding input data to the accelerator card. In a possible implementation, to increase data processing efficiency of the AI system, when receiving the input data, the host directly and transparently transmits the input data to the accelerator card. In this case, a format of the input data received by the accelerator card is an initial data format, and the host does not perform a format conversion operation. However, in another possible implementation, the host determines that a plurality of times of format conversion need to be performed on the input data received from the client, and the host first performs a format conversion operation once, and sends the input data obtained through the format conversion to the accelerator card, and the accelerator card completes a remaining format conversion operation at a proper time point.

S902: The accelerator card receives an instruction from the host, where the instruction instructs the accelerator card to perform format conversion on the input data.

A logical layer of the host has a function of determining a target data format that the input data needs to be converted into and indicating the accelerator card to perform format conversion on the input data. When determining that the data format that the input data needs to be converted into is inconsistent with the current data format of the input data, the host sends the instruction to the accelerator card, where the instruction instructs the accelerator card to perform format conversion on the input data. In addition, the instruction further includes a mapping relationship between the current data format of the input data and the target data format. For descriptions of the mapping relationship, refer to step S504. Details are not described herein again.

S903: The accelerator card performs format conversion on the input data according to the instruction of the host.

After receiving the instruction of the host, the accelerator card performs format conversion on the input data based on the target data format that needs to be converted into and the mapping relationship between the target data format and the format of the input data that are indicated in the instruction, and writes the input data obtained through the format conversion into the memory.

S904: The accelerator card processes the data obtained through the format conversion, to execute an AI task.

The format conversion of the input data is to increase efficiency of processing the AI task. Therefore, after completing the format conversion on the input data, the accelerator card uses the input data obtained through conversion to perform calculation related to the AI task.

The AI system provided in this application may have a plurality of usage scenarios. In a possible implementation, the AI system is deployed in a company that has AI services and that needs to process AI tasks. The AI system is dedicated to executing the AI tasks of the company. In this case, an employee of the company, as a user, sends an AI task and corresponding feature data to the AI system through a client. However, in another possible implementation, computing power, in the AI aspect, provided by the AI system may be provided as a cloud service for a user. In this case, a company having a small quantity of AI services does not need to purchase and deploy the AI system. Instead, the company can directly purchase the cloud service to process the AI tasks. However, in a cloud service scenario, both a host and an accelerator card may be deployed on a public cloud, and a user remotely sends an AI task to the host through a client such as software or a web page; or only an accelerator card may be deployed on a public cloud, a host is connected to the accelerator card through a network, and a user may directly operate the host. An architecture of the AI system in the cloud service scenario is not limited in this application.

FIG. 10 is a schematic diagram of an interface in a cloud service scenario according to this application. As shown in FIG. 10, the interface in the cloud service scenario may be provided for a user to perform the following operations: First, the user may select a type of an AI task that needs to be executed, for example, an inference task or a training task. Then, the user may upload data related to the AI task to a cloud service system. The data may include feature data, and may further include weight data related to a model, and the like. The cloud service system may further provide some models. In this case, the user may not upload model-related data, but select a model used by the AI task from the models provided by the cloud service system. The cloud service system may specify a format of data to be received. For example, the cloud service system supports the user in entering data in an NCHW or NHWC format and check whether the format of the data entered by the user satisfies a requirement. When an AI system supports the user in entering a plurality of data formats, a host may provide an option or a form for the user to select or fill in a format of input data. Finally, the user may start the AI task. This step is equivalent to enabling the host in the AI system to receive the AI task and the corresponding data, so that the AI system can perform the method procedure in FIG. 6, FIG. 8, or FIG. 9.

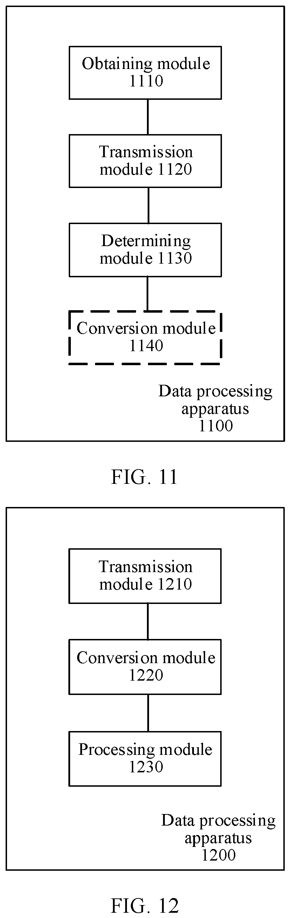

FIG. 11 is a schematic diagram of module composition of a data processing apparatus 1100. The data processing apparatus 1100 is a host or a part of the host in FIG. 4. As shown in FIG. 11, the data processing apparatus 1100 includes the following modules:
an obtaining module 1110, configured to obtain an AI task and first data corresponding to the AI task from a user, where the first data is in a first format;
a transmission module 1120, configured to send a first instruction to an accelerator card based on the AI task, where the first instruction instructs the accelerator card to convert the first data into second data in a second format; and
a determining module 1130, configured to determine, based on format information of the first data obtained by the obtaining module 1110, that the first data is in the first format.

The data processing apparatus 1100 may further include a conversion module 1140, configured to convert, based on the AI task, the first data into the second data in the second format.

The obtaining module 1110, the transmission module 1120, the determining module 1130, and the conversion module 1140 in the data processing apparatus 1100 may be configured to perform the procedures shown in FIG. 6 and FIG. 8. Specifically, the obtaining module 1110 is configured to perform step S601 in FIG. 6 and step S801 in FIG. 8, the transmission module 1120 is configured to perform step S602, S604, and S605 in FIG. 6, and step S804 in FIG. 8, the determining module is configured to perform step S603 in FIG. 6 and step S802 in FIG. 8, and the conversion module is configured to perform step S803 in FIG. 8. Details are not described herein again.

FIG. 12 is a schematic diagram of module composition of another data processing apparatus 1200. The data processing apparatus 1200 is an accelerator card or a part of the accelerator card in FIG. 4. As shown in FIG. 12, the data processing apparatus 1200 includes the following modules:
a transmission module 1210, configured to receive first data and a first instruction that are sent by a host, where the first data is in a first format;
a conversion module 1220, configured to convert the first data into second data according to the first instruction, where the second data is in a second format, and
a processing module 1230, configured to execute an AI task by using the second data.

The transmission module 1210, the conversion module 1220, and the processing module 1230 in the data processing apparatus 1200 may be configured to perform the procedure shown in FIG. 9. Specifically, the transmission module 1210 is configured to perform steps S901 and S902 in FIG. 9, the conversion module 1220 is configured to perform step S903 in FIG. 9, and the processing module 1230 is configured to perform step S904 in FIG. 9. Details are not described herein again.

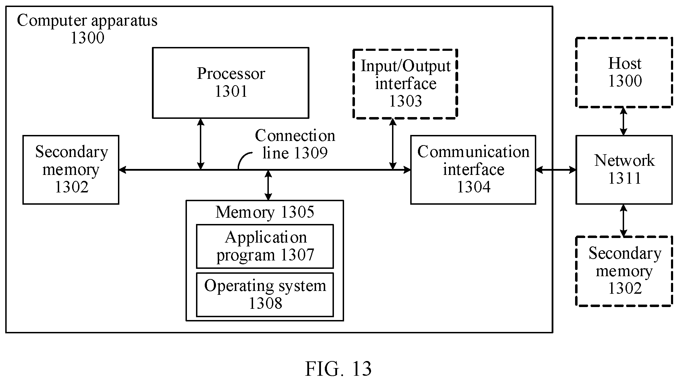

FIG. 13 is a schematic diagram of a structure of a computer apparatus 1300 according to this application.

The computer apparatus 1300 in this embodiment may be a specific implementation of the computer apparatus in the foregoing embodiments, and may be the host in FIG. 4, or may be the accelerator card in FIG. 4.

As shown in FIG. 13, the computer apparatus 1300 includes a processor 1301, and the processor 1301 is connected to a memory 1305. The processor 1301 may be computational logic such as a field programmable gate array (English full name: Field Programmable Gate Array, FPGA for short) or a digital signal processor (English full name: Digital Signal Processor, DSP for short), or a combination of any above computational logic. Alternatively, the processor 1101 may be a single-core processor or a multi-core processor.

The memory 1305 may be a RAM memory, a flash memory, a ROM memory, an EPROM memory, an EEPROM memory, a register, or a storage medium in any other form known in the art. The memory may be configured to store program instructions. When the program instructions are executed by the processor 1301, the processor 1301 performs the method in the foregoing embodiments.

A connection line 1309 is used for transferring information between components of the communication apparatus. The connection line 1309 may use a wired connection manner or a wireless connection manner. This is not limited in this application. The connection line 1309 is further connected to a network interface 1304.

The network interface 1304 implements communication with another device or a network 1311 by using, for example but not limited to, a connection apparatus such as a cable or an electric strand. The network interface 1304 may alternatively be interconnected to the network 1311 in a wireless manner.

Some features of this embodiment of this application may be completed/supported by the processor 1301 executing the program instructions or software code in the memory 1305. Software components loaded on the memory 1305 may be summarized in terms of functions or logic, for example, the obtaining module 1110, the transmission module 1120, the determining module 1130, and the conversion module 1140 shown in FIG. 11, or the transmission module 1210, the conversion module 1220, and the processing module 1230 shown in FIG. 12.

In an embodiment of this application, after the memory 1305 loads the program instructions, the processor 1301 executes a transaction related to the foregoing functional/logical module in the memory 1305.

In addition, FIG. 13 shows merely an example of the computer apparatus 1300. The computer apparatus 1300 may include more or fewer components than those shown in FIG. 13, or may have a different component configuration manner. In addition, the various components shown in FIG. 13 may be implemented by hardware, software, or a combination of hardware and software. For example, the memory and the processor may be implemented in one module. The instructions in the memory may be written into the memory in advance, or may be loaded by the processor in a subsequent execution process. This is not limited in this application.

## Claims

1. An artificial intelligence AI system, wherein the AI system comprises a host and an accelerator card, wherein
the host is configured to: obtain anAI task and first data corresponding to the AI task from a user, wherein the first data is in a first format; and
send a first instruction to the accelerator card based on the AI task, wherein the first instruction instructs the accelerator card to convert the first data into second data in a second format; and
the accelerator card is configured to: convert the first data into the second data according to the first instruction; and execute the AI task by using the second data.

2. The AI system according to claim 1, wherein
the host is configured to send the first instruction to the accelerator card based on an operator type comprised in the AI task.

3. The AI system according to claim 1, wherein the AI task comprises a second instruction, and the second instruction instructs to execute the AI task by using the data in the second format, and
the host is configured to send the first instruction to the accelerator card according to the second instruction.

4. The AI system according to claim 2, wherein
the host is further configured to establish a correspondence between the operator type comprised in the AI task and the second format.

5. The AI system according to any one of claims 1 to 4, wherein the host stores a first mapping relationship for converting data in the first format into data in the second format, and the first instruction comprises the first mapping relationship; and
the accelerator card is configured to convert the first data into the second data based on the first mapping relationship.

6. The AI system according to any one of claims 1 to 5, wherein
the AI system is located in a public cloud.

7. The AI system according to any one of claims 1 to 6, wherein
the AI system processes at least one AI framework, and each of the at least one AI framework supports data in the first format.

8. The AI system according to any one of claims 1 to 7, wherein
the host further stores a second mapping relationship, wherein the second mapping relationship is used for converting data in the first format into data in a third format.

9. The AI system according to any one of claims 1 to 8, wherein
the host further stores a third mapping relationship, wherein the third mapping relationship is used for converting data in a fourth format into data in the second format.

10. The AI system according to any one of claims 1 to 9, wherein
the host is further configured to: obtain format information of the first data; and
determine, based on the format information, that the first data is in the first format.

11. The AI system according to any one of claims 1 to 10, wherein
the host is further configured to output prompt information, wherein the prompt information indicates the user to enter data in the first format.

12. An artificial intelligence AI system, wherein the AI system comprises a host and an accelerator card, wherein
the host is configured to: obtain anAI task and first data corresponding to the AI task from a user, wherein the first data is in a first format;
convert the first data into second data in a second format based on the AI task; and
send the second data to the accelerator card; and
the accelerator card is configured to: receive the second data; and
execute the AI task by using the second data.

13. The AI system according to claim 12, wherein
the host is configured to convert the first data into the second data based on an operator type comprised in the AI task.

14. The AI system according to claim 12, wherein the AI task comprises a second instruction, and the second instruction instructs to execute the AI task by using the data in the second format, and
the host is configured to convert the first data into the second data according to the second instruction.

15. The AI system according to claim 13, wherein the host is further configured to establish a correspondence between the operator type comprised in the AI task and the second format.

16. The AI system according to any one of claims 12 to 15, wherein the host stores a first mapping relationship for converting data in the first format into data in the second format, and
the host is configured to convert the first data into the second data based on the first mapping relationship.

17. The AI system according to any one of claims 12 to 16, wherein
the AI system is located in a public cloud.

18. The AI system according to any one of claims 12 to 17, wherein
the AI system processes at least one AI framework, and each of the at least one AI framework supports data in the first format.

19. The AI system according to any one of claims 12 to 18, wherein
the host further stores a second mapping relationship, wherein the second mapping relationship is used for converting data in the first format into data in a third format.

20. The AI system according to any one of claims 12 to 19, wherein
the host further stores a third mapping relationship, wherein the third mapping relationship is used for converting data in a fourth format into data in the second format.

21. The AI system according to any one of claims 12 to 20, wherein
the host is further configured to: obtain format information of the first data; and
determine, based on the format information, that the first data is in the first format.

22. The AI system according to any one of claims 12 to 21, wherein
the host is further configured to output prompt information, wherein the prompt information indicates the user to enter data in the first format.

23. A data processing method, wherein the method is applied to a host in an artificial intelligence AI system, the AI system further comprises an accelerator card, and the method comprises:
obtaining an AI task and first data corresponding to the AI task from a user, wherein the first data is in a first format; and
sending a first instruction to the accelerator card based on the AI task, wherein the first instruction instructs the accelerator card to convert the first data into second data in a second format.

24. The method according to claim 23, wherein the sending a first instruction to the accelerator card based on the AI task comprises:
sending the first instruction to the accelerator card based on an operator type comprised in the AI task.

25. The method according to claim 23, wherein the AI task comprises a second instruction, and the second instruction instructs to execute the AI task by using the data in the second format, and
the sending a first instruction to the accelerator card based on the AI task comprises:
sending the first instruction to the accelerator card according to the second instruction.

26. The method according to claim 24, wherein the method further comprises:
establishing a correspondence between the operator type comprised in the AI task and the second format.

27. The method according to any one of claims 23 to 26, wherein the host stores a first mapping relationship for converting data in the first format into data in the second format, and the first instruction comprises the first mapping relationship.

28. The method according to any one of claims 23 to 27, wherein the AI system is located in a public cloud.

29. The method according to any one of claims 23 to 28, wherein the AI system processes at least one AI framework, and each of the at least one AI framework supports data in the first format.

30. The method according to any one of claims 23 to 29, wherein the host further stores a second mapping relationship, and the second mapping relationship is used for converting data in the first format into data in a third format.

31. The method according to any one of claims 23 to 30, wherein the host further stores a third mapping relationship, and the third mapping relationship is used for converting data in a fourth format into data in the second format.

32. The method according to any one of claims 23 to 31, wherein the method further comprises:
obtaining format information of the first data; and
determining, based on the format information, that the first data is in the first format.

33. The method according to any one of claims 23 to 25, wherein the method further comprises:
outputting prompt information, wherein the prompt information indicates the user to enter data in the first format.

34. A data processing method, wherein the method is applied to an accelerator card in an artificial intelligence AI system, the AI system further comprises a host, and the method comprises:
receiving first data and a first instruction that are sent by the host, wherein the first data is in a first format,
converting the first data into second data according to the first instruction, wherein the second data is in a second format; and
executing an AI task by using the second data, wherein the first data corresponds to the AI task.

35. The method according to claim 34, wherein the first instruction comprises a first mapping relationship, and the converting the first data into second data according to the first instruction comprises:
converting the first data into the second data based on the first mapping relationship.

36. The method according to claim 34 or 35, wherein the second format corresponds to an operator type comprised in the AI task.

37. The method according to any one of claims 34 to 36, wherein the AI system is located in a public cloud.

38. The method according to any one of claims 34 to 37, wherein the method further comprises:
receiving a second mapping relationship sent by the host, wherein the second mapping relationship is used for converting data in the first format into data in a third format.

39. The method according to any one of claims 34 to 38, wherein the method further comprises:
receiving a third mapping relationship sent by the host, wherein the third mapping relationship is used for converting data in a fourth format into data in the second format.

40. The method according to any one of claims 34 to 39, wherein the AI system processes at least one AI framework, and each of the at least one AI framework supports data in the first format.

41. A data processing apparatus, wherein the data processing apparatus is located in an artificial intelligence AI system, the AI system further comprises an accelerator card, and the data processing apparatus comprises:
an obtaining module, configured to obtain an AI task and first data corresponding to the AI task from a user, wherein the first data is in a first format; and
a transmission module, configured to send a first instruction to the accelerator card based on the AI task, wherein the first instruction instructs the accelerator card to convert the first data into second data in a second format.

42. The data processing apparatus according to claim 41, wherein
the transmission module is configured to send the first instruction to the accelerator card based on an operator type comprised in the AI task.

43. The data processing apparatus according to claim 41, wherein the AI task comprises a second instruction, and the second instruction instructs to execute the AI task by using the data in the second format, wherein
the transmission module is configured to send the first instruction to the accelerator card according to the second instruction.

44. The data processing apparatus according to any one of claims 41 to 43, wherein
the obtaining module is further configured to establish a correspondence between the operator type comprised in the AI task and the second format.

45. The data processing apparatus according to any one of claims 41 to 44, wherein
the data processing apparatus stores a first mapping relationship for converting data in the first format into data in the second format, wherein the first instruction comprises the first mapping relationship.

46. The data processing apparatus according to any one of claims 41 to 45, wherein
the AI system is located in a public cloud.

47. The data processing apparatus according to any one of claims 41 to 46, wherein
the AI system processes at least one AI framework, and each of the at least one AI framework supports data in the first format.

48. The data processing apparatus according to any one of claims 41 to 47, wherein
the data processing apparatus further stores a second mapping relationship, wherein the second mapping relationship is used for converting data in the first format into data in a third format.

49. The data processing apparatus according to any one of claims 41 to 48, wherein
the data processing apparatus further stores a third mapping relationship, wherein the third mapping relationship is used for converting data in a fourth format into data in the second format.

50. The data processing apparatus according to any one of claims 41 to 49, wherein
the obtaining module is further configured to obtain format information of the first data; and
the data processing apparatus further comprises a determining module, configured to determine that the first data is in the first format.

51. The data processing apparatus according to any one of claims 41 to 50, wherein
the transmission module is further configured to output prompt information, wherein the prompt information indicates the user to enter data in the first format.

52. A data processing apparatus, wherein the data processing apparatus is located in an artificial intelligence AI system, the AI system further comprises a host, and the data processing apparatus comprises:
a transmission module, configured to receive first data and a first instruction that are sent by the host, wherein the first data is in a first format;
a conversion module, configured to convert the first data into second data according to the first instruction, wherein the second data is in a second format; and
a processing module, configured to execute an AI task by using the second data, wherein the first data corresponds to the AI task.

53. The data processing apparatus according to claim 52, wherein the first instruction comprises a first mapping relationship, and
the conversion module is configured to convert the first data into the second data based on the first mapping relationship.

54. The data processing apparatus according to claim 52 or 53, wherein the second format corresponds to an operator type comprised in the AI task.

55. The data processing apparatus according to any one of claims 52 to 54, wherein the AI system is located in a public cloud.

56. The data processing apparatus according to any one of claims 52 to 55, wherein
the transmission module is further configured to receive a second mapping relationship sent by the host, wherein the second mapping relationship is used for converting data in the first format into data in a third format.

57. The data processing apparatus according to any one of claims 52 to 56, wherein
the transmission module is further configured to receive a third mapping relationship sent by the host, wherein the third mapping relationship is used for converting data in a fourth format into data in the second format.

58. The data processing apparatus according to any one of claims 52 to 57, wherein the AI system processes at least one AI framework, and each of the at least one AI framework supports data in the first format.

59. A computer apparatus, wherein the computer apparatus comprises a memory and a processor, the memory is configured to store program code, and the processor is configured to process the program code to perform the data processing method according to any one of claims 23 to 33.

60. A computer apparatus, wherein the computer apparatus comprises a memory and a processor, the memory is configured to store program code, and the processor is configured to process the program code to perform the data processing method according to any one of claims 34 to 40.
